# EUROPEAN PATENT APPLICATION

(11) **EP 4 568 215 A1**
(43) Date of publication of application: **11.06.2025**
(21) Application number: 23307145.5
(22) Date of filing: 06.12.2023
(51) Int. Cl.: H04L 41/12, H04L 41/0853, H04J 3/06, H04L 7/00, H04L 12/28, H04L 41/0806, H04L 43/028, H04L 43/106

(54) **DATA PROCESSING METHODS IN AN ETHERNET NETWORK, AND DATA PROCESSING APPARATUSES IN AN ETHERNET NETWORK**

(71) Applicant: SCHNEIDER ELECTRIC INDUSTRIES SAS, 92500 Rueil-Malmaison (FR)
(72) Inventor: Ruhhammer, Simon, 97265 Hettstadt (DE); Krämer, Simon, 97084 Würzburg (DE); Lankl, Maximilian, 97907 Hasloch (DE)
(74) Representative: Manitz Finsterwald Patent- und Rechtsanwaltspartnerschaft mbB

(57) **Abstract**

A data processing method in an Ethernet network is provided. The Ethernet network comprises a topology of a plurality of devices and a plurality of connections. The data processing method comprises: receiving data from a plurality of locations in the topology; and merging the data received from the plurality of locations.

## Description

The present disclosure relates to data processing methods in an Ethernet network, and data processing apparatuses in an Ethernet network.

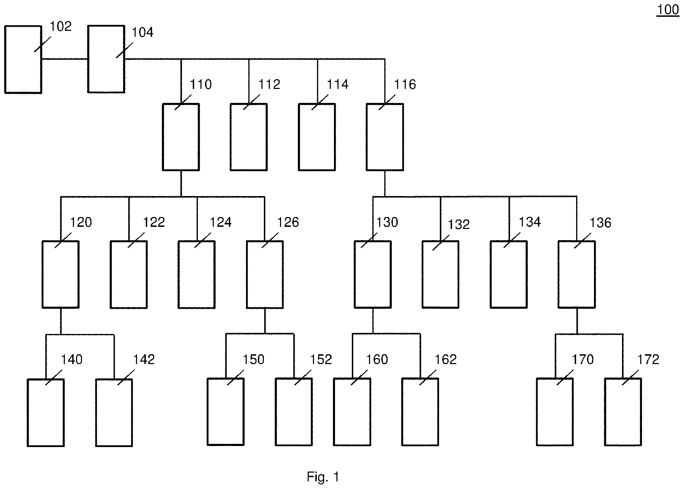

Figure 1 shows an illustration 100 of an exemplary Ethernet network. A main computer 102 may be provided. The main computer 102 may control a plurality of devices 104-172, which may include one or more further computers, or other devices like input/output (I/O) devices, storage devices, for example drives, actuators or sensors.

The devices 104-172 may be distinguished by addresses, for example IP (Internet Protocol) addresses.

For example, the main computer 102 may be connected to a further computer 104. The further computer 104 may be connected to yet a further computer 110, a first device 112, a second device 114, and still another computer 116. The first device 112 and/ or the second device 114 may be an IO device, a storage device, an actuator or a sensor.

Similarly, the further computer 110 may be connected to various devices or computers, for example a computer 120 (which may be connected to devices 140 and 142), devices 122 and 124, and a further computer 126 (which may be connected to devices 150 and 152). The computers 120 and 126 and the devices 122 and 124 may form a subnetwork of the Ethernet network 100.

Furthermore, the further computer 116 may be connected to various devices or computers, for example a computer 130 (which may be connected to devices 160 and 162), devices 132 and 134, and a further computer 136 (which may be connected to devices 170 and 172). The computers 320 and 136 and the devices 132 and 134 may form a subnetwork of the Ethernet network 100.

It will be understood that the network structure illustrated in Figure 1 is for illustrative purposes only, and that various embodiments as described herein may be applied to any other network structure.

An Ethernet network as illustrated in Figure 1 may for example be used in a distributed control system.

In a distributed control system where devices are synchronized across multiple networks or subnetworks, it may be desired to record data flow, including timing, at multiple positions (or locations) of the topology, for example in order to understand system behavior, for example to debug a TimeAwareShaping based communication (for example as specified in the IEEE 802.1 Qbv standard) in a TSN (Time-Sensitive Networking) network. For example, data (for example signals or commands) may be recorded at a publisher (for example the sender of data), data may be recorded at at least one selected point in the network (for example at a point or location between the publisher and the intended recipient of the data), and data may be recorded at a subscriber (for example the intended recipient of the data). In case of multi subscribers, data may be recorded at each subscriber.

The data recorded may include or may be the data processed or transmitted in the Ethernet network, or may be based on the data processed or transmitted in the Ethernet network (for example a checksum of the data processed or transmitted in the Ethernet network).

An Ethernet network as illustrated in Figure 1 may for example be used in a large network of synchronized devices. In a large network of synchronized devices, it may be desired to record at multiple points of the topology, for example for reasons similar to the reasons described above for the distributed control system. For example, when using Sercos (Serial Realtime Communication System), which is using a frame summation technology and modifying those frames on the fly in devices, it may be desired to record controller out, controller in and device in and out in order to understand situations with distorted/destroyed/modified data, for example telegrams. Data exchanges in a Sercos environment may be referred to as telegrams.

EP 3 454 507 B1 discloses a network tap comprising a first network connector, a second network connector, a third network connector for connecting to a monitoring device, a phase locked loop, and circuitry. The circuitry is configured to extract a clock signal from a first signal on an output of one of the first and second network connectors, provide the clock signal to the phase locked loop, receive a reference clock signal derived from the recovered clock signal from the phase locked loop and clock a second signal on the input of the other one of the first and second network connectors using the received reference clock signal if a link has been established between a first network device and the first network connector and a link has been established between a second network device and the second network connector.

US 11,290,970 B2 discloses a method for synchronizing a timing end application (TEA) in an edge communication network which includes: receiving, at a first access device, a time stamp from a first TEA communicatively coupled to the first access device; transmitting the time stamp from the first access device to a second access device via communication media of the edge communication network; adjusting the time stamp to account for transit time of the time stamp from the first access device to the second access device; and after adjusting the time stamp, transmitting the time stamp from the second access device to a second TEA communicatively coupled to the second access device.

The known methods and devices lack a way to obtain a consolidated insight on data acquired at various locations in the topology of the network. Thus, the known methods and devices do not allow efficient analysis of the data.

It is an object of the invention to provide a data processing method that allows efficient analysis of the data.

It is also an object of the invention to provide an apparatus which allows efficient analysis of the data.

These objects are accomplished with the features of claim 1 and with the features of claim 8.

A data processing method in an Ethernet network has the features of claim 1. The Ethernet network comprises a topology of a plurality of devices and a plurality of connections. The data processing method comprises: receiving data from a plurality of locations in the topology; and merging the data received from the plurality of locations.

Illustratively, recording of data of the Ethernet network may be provided. For example, a synchronized recording with distributed Ethernet recorders may be provided.

Recording of the data may be performed like in commonly used networks TAPs (Test Access Points), where everything is recorded, and then the filtering and information extraction happens as part of the analysis.

It will be understood that it may be important for the analysis tool (for example for the central diagnosis station) to be able to understand the traffic, but not for the recording interface (for example each of the distributed recorders) itself.

The data from the plurality of locations in the topology may be received via at least one connection of the plurality of connections. This may allow re-using the Ethernet network for transmitting the data. Illustratively, the data (which may include information about data transmission in the Ethernet network) may be transmitted using the Ethernet network. This may allow easy implementation without requiring a separate network for transmitting the data.

The data from the plurality of locations in the topology may be received via a connection (for example a wired connection or a wireless connection) independent from the plurality of connections. This may allow transmitting the data even if the Ethernet network is congested or not working at all.

The locations may comprise at least one of the devices and/ or at least one of the connections. For example, if the location is or corresponds to one of the devices, the data may include or may be data sent by the device or data received by the device. For example, if the location is or corresponds to one of the connections, the data may include or may be data transmitted through the connection.

The data may comprise data processed by at least one of the devices and/or data transmitted using at least one of the connections and/or data acquired by at least one of the devices using a fieldbus and/or external hardware signals acquired by at least one of the devices. The external hardware signals may be signals from sensors. The fieldbus may be different from Ethernet, and may for example be or be based on one of the following: AFDX, AS-Interface, CANopen, CompoNet, ControlNet, CC-Link, DeviceNet, EtherCAT, Ethernet Powerlink, Interbus, LonWorks, Modbus, PROFIBUS DP, PROFIBUS PA, PROFINET IO, PROFINET IRT, SERCOS III, SERCOS interface, Foundation Fieldbus H1, Foundation HSE, or RAPIEnet.

The data processing method may further comprise configuring the locations for transmitting data to be processed by the data processing method. The configuration may be identical for each of the locations, or may be different (in other words: specific) for different locations.

Configuring the locations may comprise setting a time interval for transmitting the data, and/ or may comprise defining which data to transmit.

Configuring the locations may comprise synchronizing the locations, and the data may comprise time stamps. With the locations synchronized, the time stamps in the data may be meaningful, irrespective of which location is the originator of the data. This may, for example, allow sorting the data in a chronological order.

Merging may comprise sorting the data, and/ or filtering the data, and/or combining the data. For example, the data may be sorted according to time stamp. For example, the data may be filtered according to a user-defined filter. For example, the data may be combined according to a type of the data.

A data processing apparatus in an Ethernet network has the features of claim 8. The Ethernet network comprises a topology of a plurality of devices and a plurality of connections. The data processing apparatus comprises: an interface configured to receive data from a plurality of locations in the topology; and a merging circuit configured to merge the data received from the plurality of locations.

The data processing apparatus may be provided as a device different from the devices of the topology of the Ethernet network, or the data processing apparatus may be included in one of the devices of the topology of the Ethernet network.

The interface may be connected to at least one connection of the plurality of connections.

The interface may be free from a connection to the plurality of connections; instead, the interface may receive the data using a wireless connection or another wired connection.

The locations may comprise at least one of the devices and/ or at least one of the connections.

The data may comprise data processed by at least one of the devices and/or data transmitted using at least one of the connections and/or data acquired by at least one of the devices using a fieldbus and/or external hardware signals acquired by at least one of the devices.

The data processing apparatus may further comprise a configuration circuit configured to configure the locations for transmitting data to be processed by the data processing method.

The configuration circuit may be configured to synchronize the locations. The data may comprise time stamps.

The merging circuit may be configured to sort the data, and/ or filter the data, and/or combine the data.

In a further aspect, a system may be provided. The system may include the data processing apparatus as described herein, and the Ethernet network.

In yet a further aspect, a recording method and/ or a recorder device in an Ethernet network may be provided, which may record data provided by a fieldbus different from Ethernet.

In yet a further aspect, a recording method and/ or a recorder device in an Ethernet network may be provided, in which external hardware signals may be recorded.

In yet a further aspect, a recording method and/ or a recorder device in an Ethernet network may be provided, wherein the recording is carried out in a device of the Ethernet network.

In yet a further aspect, a distributed recorder may be provided.

In the following, embodiments of the invention will be explained with reference to the drawings, in which
- Figure 1: shows an illustration of an exemplary Ethernet network;
- Figure 2: shows an illustration of an Ethernet network with distributed recorders according to various embodiments;
- Figure 3: shows an illustration of an Ethernet network with distributed recorders according to various embodiments;
- Figure 4: shows an illustration of distributing configuration data and/or control data in an Ethernet network according to various embodiments;
- Figure 5: shows an illustration of collecting data in an Ethernet network according to various embodiments;
- Figure 6: shows a flow diagram illustrating a data processing method in an Ethernet network according to various embodiments;
- Figure 7: shows an illustration of a data processing apparatus in an Ethernet network according to various embodiments;. and
- Figure 8: shows a computer system with a plurality of computer hardware components configured to carry out steps of a data processing method in an Ethernet network according to various embodiments.

According to various embodiments, Ethernet recordings may be done on independent devices. For example, those devices may be synchronized so that they share a common notion of time. Synchronization may be provided for example via PTP (Precision Time Protocol, according to IEEE standard), and a time stamp based on the synchronization may be included in the recorded data.

According to various embodiments, a mechanism that is already available on the monitored bus (for example in the Ethernet network) for synchronization may be used for synchronization. For example, when using Sercos, SercosTime may be used for synchronization.

According to various embodiments, a separate network may be used for distributing the sync (in other words: the synchronization or synchronization signal).

According to various embodiments, recordings may be stored locally on the devices for later retrieval by a diagnosis station. The diagnosis station may find (or discover) the devices via a discovery mechanism.

According to various embodiments, the devices may automatically send this data to a central storage location that is preconfigured in the devices. According to various embodiments, the central storage location may be identical to the central diagnosis station. Alternatively, the central diagnosis station may be different from the central storage location, so that the analysis is carried out on an external device (for example the central diagnosis station) that retrieves the data from the storage location on demand.

When using the same network for recording and control/forwarding of recording, a mechanism may be used to guarantee communication between the diagnosis station and the recorders (which may also be referred to as recording stations).

If the network that is surveilled (in other words: the network for which data is recorded) is also used for forwarding of recording control and (recorded) data, it may be desirable that the recording traffic (for example the data related to the recording control and the recorded data) is always using a priority that is lower than the priority of the traffic that it seeks to record. Various field busses (like Sercos or TSN implementations) may provide specific time slices that allow for regular IP communication to occur without disturbing the real-time communication.

The recording stations may need to be controlled reliably, so that a broadcasting mechanism (for example like it is available in UDP) may not be sufficient, as there is no guarantee that all recording stations are reached. Therefore, a control mechanism using TCP unicasting may be one solution for making sure that all participants of the recording system are reached in a timely manner.

However, UDP may be incorporated anyways as a recording station discovery method, which may result in the following communication flow of a distributed recording system:
- State 1 (powered, but no recording functionality is desired): all parts of the system are entirely passive;
- State 2 (powered, a recording functionality is planned to be used): the diagnosis station may cyclically (for example every second) send a discovery broadcast, to which recording stations may respond with an answer message; the diagnosis station may then update its list of currently available recording stations according to the received answer telegrams;
- State 3 (start of recording): control frames may be unicast to every known recording station, and the system may check whether any recording start could not be transferred;
- State 4 (transmission of recorded data): recorded data may be unicast from every recording station to the central storage station using TCP unicast, so that disruptions are detectable and lost frames may be retransmitted;
- State 5 (end of recording): in the same fashion as the start of the recording, the diagnosis station may use TCP unicast to stop the recording stations; a check may be carried out whether this action has been completed successfully on all known recording stations.

Using the network to be recorded also as the control and data exchange network for the recording solution may imply that a certain amount of buffering must be occurring inside the recording stations to account for the fact that the machine network may be over a certain amount of load (depending on number of used recording stations), which may not allow the recording system to transfer recorded data at the same rate that it is collected at.

The recorded data may be merged in the diagnosis station to one combined recording, for example extended with source information and synchronized timestamp. The combined recording may be displayed to users (for example for manual analysis), or may be subjected to automated analysis.

The merge may be carried out in the central storage location. An interface to the central storage location (which may be also referred to as central storage station) may be provided, for example for using standard recording tools like Wireshark.

An indication (or a signal), for example via a light, for example light emitting diode (LED), may be provided on the devices, indicating whether they are connected to a diagnosis station and/or have been discovered by a diagnosis station.

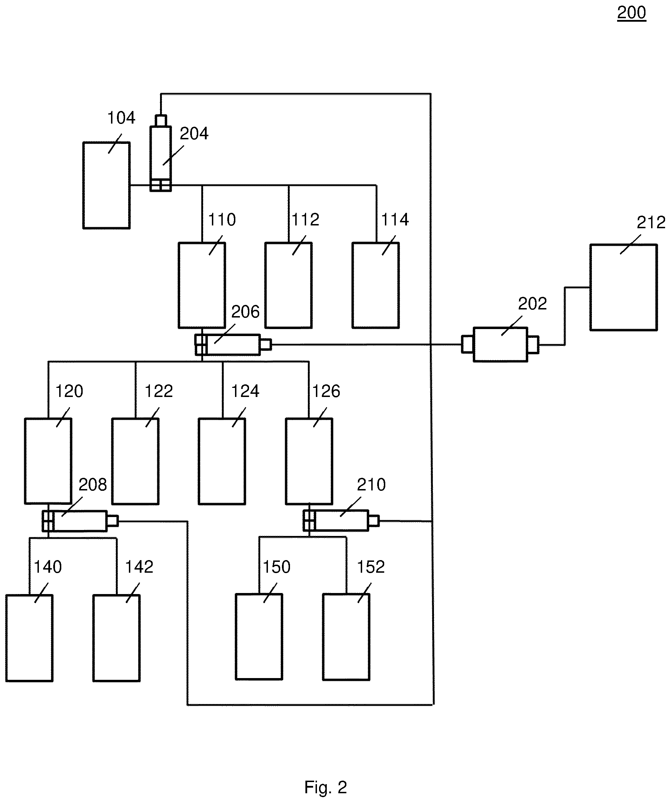

Figure 2 shows an illustration 200 of an Ethernet network with distributed recorders 204, 206, 208, 210 at a plurality of locations in the topology of the Ethernet network according to various embodiments. The topology of the Ethernet network includes a plurality of devices 104, 110, 112, 114, 120, 122, 124, 126, 140, 142, 150, 152 as illustrated in Figure 1 and a plurality of connections between the devices 104, 110, 112, 114, 120, 122, 124, 126, 140, 142, 150, 152.

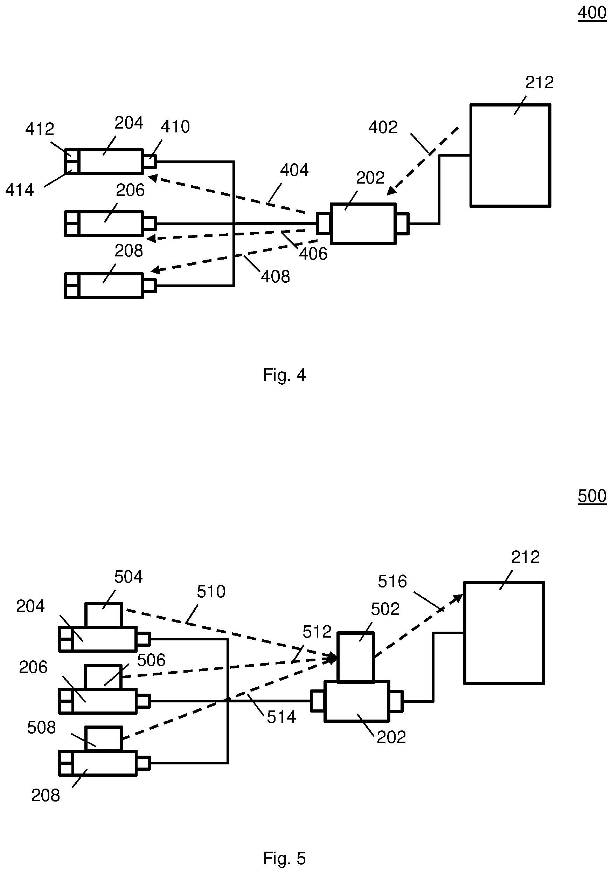

As exemplarily shown for one recorder 204 in Fig. 4, the distributed recorders are illustrated with two small boxes 412, 414 near the connection line of the Ethernet network, and one box 410 which illustrates the interface to the central diagnosis station. The network interfaces illustrated by the boxes 412, 414 may have the same functionality as on an existing Ethernet TAP; these network interfaces may be of ultra-low delay, so that they don't interfere with the system behaviour that they seek to record.

The distributed recorders 204, 206, 208, 210 may be connected with a central diagnosis station 202 via a wired connection. The wired connection may use connections separate from the connections of the Ethernet network, as illustrated in Figure 2. Alternatively, the wired connect may be a part (or all) of the Ethernet network. The central diagnosis station 202 may be connected with a computer 212 which may provide data from the distributed recorders 204, 206, 208, 210 to a user.

The central diagnosis station 202 may configure the recorders 204, 206, 208, 210, and may already filter the data and/ or automatically merge the data.

TSN (Time-Sensitive Networking) with PTP (Precision Time Protocol) may be used for synchronizing the recorders. However, it will be understood that any other method may be used for synchronizing the recorders.

According to various embodiments, the existing (Ethernet) network that is to be evaluated may be used to transmit the recorded data. The transfer of the recorded data may occur automatically (for example after a pre-determined period of time or after a pre-determined amount of data recorded), or may be triggered (for example by the central diagnosis station).

The recorded data (for example encoder values) or Fieldbus packet may be converted to Ethernet frames.

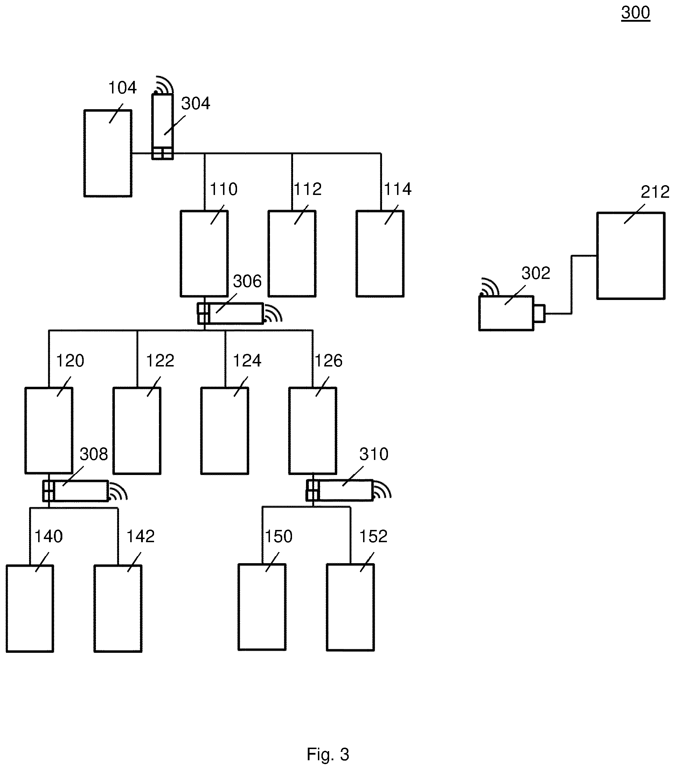

Figure 3 shows an illustration 300 of an Ethernet network with distributed recorders 304, 306, 308, 310 at a plurality of locations in the topology of the Ethernet network according to various embodiments. Various portions of the Ethernet network illustrated in Figure 3 may be identical or similar to the Ethernet network illustrated in Figure 2, so that duplicate description may be omitted and the same reference signs may be used.

The distributed recorders 304, 306, 308, 310 may be connected with a central diagnosis station 302 via a wireless connection.

For example, the wireless distributed recorders 304, 306, 308, 310 may be provided with a battery, and may be provided as a small box which may be attached to one of the computers or devices, or to connections between the computers and devices. Time sync may be provided with PTP, so that no separate cable is required for time sync.

Figure 4 shows an illustration 400 of distributing configuration data and/or control data in an Ethernet network according to various embodiments. Various portions illustrated in Figure 4 may be identical or similar to the Ethernet network illustrated in Figure 2, so that duplicate description may be omitted and the same reference signs may be used. It will be understood that although Figure 4 is described with reference to wired distributed recorders 204, 206, 208, a corresponding way of distributing configuration data and/ or control data may be provided for wireless recorders (for example wireless distributed recorders 304, 306, 308 as illustrated in Figure 3). The computer 212 may provide configuration data and/ or control data to the central diagnosis station 202, like indicated by arrow 402. The central diagnosis station 202 may provide the configuration data and/or control data to the distributed recorders 204, 206, 208, like illustrated by arrows 404, 404, 408. For example, the computer 212 may provide configuration data for all of the distributed recorders 204, 206, 208 to the central diagnosis station 202, and the central diagnosis station 202 may provide the specific configuration data and/ or control data to each of the distributed recorders 204, 206, 208. The configuration data and/ or control data provided by the computer 212 to the central diagnosis station 202 may include portions which are identical for all distributed recorders 204, 206 ,208, and/ or may include portions which are specific for each of the distributed recorders 204, 206, 208. The configuration data and/ or control data may for example include information on how often the distributed recorder is to transmit data, or may define which data is to be transmitted by the distributed recorder.

Figure 5 shows an illustration 500 of collecting data (for example telegrams) in an Ethernet network according to various embodiments. Various portions illustrated in Figure 5 may be identical or similar to the Ethernet network illustrated in Figure 2, so that duplicate description may be omitted and the same reference signs may be used. It will be understood that although Figure 5 is described with reference to wired distributed recorders 204, 206, 208, a corresponding way of collecting data may be provided for wireless recorders (for example wireless distributed recorders 304, 306, 308 as illustrated in Figure 3). Each of the distributed recorders 204, 206, 208 may collect data and may forward these data to the central diagnosis station 202, and the central diagnosis station 202 may merge the data received from the distributed recorders 204, 206, 208. For example, the distributed recorder 204 may collect data 504 and may forward these data 504 to the central diagnosis station 202, like illustrated by arrow 510; the distributed recorder 206 may collect data 506 and may forward these data 506 to the central diagnosis station 202, like illustrated by arrow 512; and the distributed recorder 208 may collect data 508 and may forward these data 508 to the central diagnosis station 202, like illustrated by arrow 514. The central diagnosis station 202 may merge the data 504, 506, 508 to obtain merged data 502. The central diagnosis station 202 may obtain the merged data 502 by filtering and/ or sorting (for example according to time stamp) of the data 504, 506, 508. The central diagnosis station 202 may provide the merged data 502 to the computer 212, like illustrated by arrow 516.

The central diagnosis station 202 may know from which device every set of data comes. Thus, the central diagnosis station 202 may provide automatic merging. The data may be analyzed. If it is determined that there is a delay somewhere in the Ethernet network, for example a "FastForwardMode" may be switched on, in which packets are not stored or changed, so that the delay may be overcome.

The data recorded by the distributed recorders may obtain data not only from Ethernet, but also from other field busses (for example multiple and/ or different field busses). When Fieldbus gateways are involved in the data flow, late synchronization of timestamps may be provided based on additional information accessible only for the diagnosis station or central storage.

Such a late synchronization may be implemented as follows: In an industrial Ethernet network, all system parameters may be known, so that the system behaviour may be achieved reliably; therefore, the synchronization "offset" between two used networks may be known at least to the interfacing gateway, and this information may be transferred either automatically, or manually (for example by the user) by inputting an offset number into the diagnosis software. This offset may then be used to meaningfully merge the recorded traffic.

According to various embodiments, the distributed recorders may record hardware (HW) signals, for example digital I/Os (inputs/ outputs). For example, external hardware signals (for example from sensors, for example digital or analog sensor input, or data from an encoder) connected to distributed recorder may be included in the data provided from the distributed recorder to the central diagnosis station.

According to various embodiments, at least one of the distributed recorders may be provided as a software component integrated into one of the Ethernet devices (for example controllers, drives, or I/Os), and the synchronization that is already present may be used (e.g. PTP when using Ethernet TSN as fieldbus). In other words, instead of providing a distributed recorder connected to one of the Ethernet devices, the distributed recorder may be provided as software in the Ethernet device itself.

According to various embodiments, data may be automatically synchronized, for example by providing a synchronization signal from the central diagnosis station to each of the distributed recorders.

According to various embodiments, data may be automatically combined, for example in the central diagnosis station.

The network layout according to various embodiments with a central diagnosis station and a plurality of distributed recorders may be scalable to a high number of devices. Short recording times or high network bandwidth for transport of recording may be provided for a high number of devices.

The network layout according to various embodiments may provide easy use. When only running on the host network (in other words, when the central diagnosis station and the distributed recorders are provided as part of the Ethernet network itself), only a connection to the host may be necessary.

The host of the network may be any device. For example, the host of the network may be the host of the diagnosis functionality, or any other device. For example, the computer 102 as shown in Fig. 1 may be the host of the network, but the diagnostic functionality may be hosted by device 116 or by any device. The host of the diagnostic functionality may be referred to as central diagnosis station.

When using a network different from the Ethernet network for the communication between the diagnosis station and the distributed recorders, for example a wireless network, for example WiFi, may be used as the network for the communication between the diagnosis station and the distributed recorders.

It will be understood that although Figures 1, 2, 3, 4, and 5 illustrate various embodiments with a specific number of devices in the Ethernet network, a specific hierarchical structure of the Ethernet network, and with a specific number of distributed recorders, the embodiments may be applied to any structure of the Ethernet network, and any number of devices and distributed recorders.

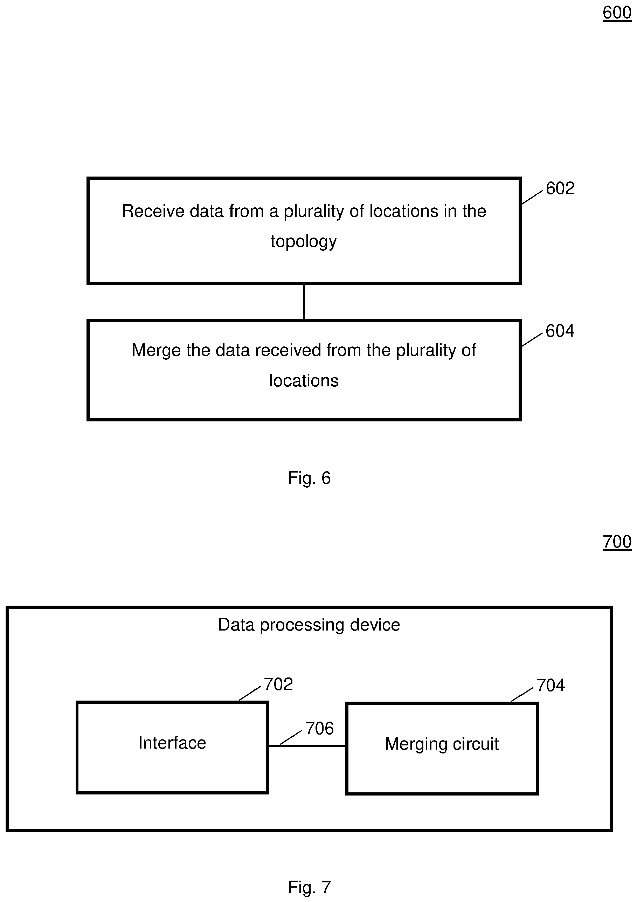

Figure 6 shows a flow diagram 600 illustrating a data processing method in an Ethernet network according to various embodiments. The Ethernet network may include (or may be arranged according to) a topology of a plurality of devices and a plurality of connections. At 602, data may be received from a plurality of locations in the topology. At 604, data received from the plurality of locations may be merged. The data processing method may be carried out by a central diagnosis station.

According to various embodiments, the data from the plurality of locations in the topology may be received via at least one connection of the plurality of connections (of the Ethernet network). Alternatively, or additionally, the data from the plurality of locations in the topology may be received via a connection independent from the plurality of connections (for example a separate network which is different from the Ethernet network).

According to various embodiments, the locations may include or may be at least one of the devices and/ or at least one of the connections.

According to various embodiments, the data may include or may be data processed by at least one of the devices and/or data transmitted using at least one of the connections and/or data acquired by at least one of the devices using a fieldbus and/or external hardware signals acquired by at least one of the devices.

According to various embodiments, the data processing method may further include configuring the locations (or the members which provide the transmitting, for example the distributed recorders or the devices of the Ethernet network) for transmitting data to be processed by the data processing method.

According to various embodiments, configuring the locations (or the members) may include or may be synchronizing the locations (or the members). The data may include time stamps.

According to various embodiments, merging may include or may be sorting the data, and/ or filtering the data, and/or combining the data.

Figure 7 shows an illustration of a data processing apparatus 700 in an Ethernet network according to various embodiments. The Ethernet network may include a topology of a plurality of devices and a plurality of connections. The data processing apparatus 700 may include an interface 702 and a merging circuit 704. The interface 702 may be configured to receive data from a plurality of locations in the topology. The merging circuit 704 may be configured to merge the data received from the plurality of locations. The data processing apparatus 700 may also be referred to as central diagnosis station.

The interface 702 and the merging circuit 704 may be coupled with each other, e.g. via an electrical connection 706, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

According to various embodiments, the interface 702 may be connected to at least one connection of the plurality of connections. Alternatively, according to various embodiments, the interface 702 may be free from a connection to the plurality of connections.

According to various embodiments, the locations may include or may be at least one of the devices and/ or at least one of the connections.

According to various embodiments, the data may include or may be data processed by at least one of the devices and/or data transmitted using at least one of the connections and/or data acquired by at least one of the devices using a fieldbus and/or external hardware signals acquired by at least one of the devices.

According to various embodiments, the data processing apparatus 700 may further include a configuration circuit (not shown in Fig. 7) configured to configure the locations for transmitting data to be processed by the data processing method.

According to various embodiments, the configuration circuit may be configured to synchronize the locations. The data may include time stamps.

According to various embodiments, the merging circuit 704 may be configured to sort the data, and/ or filter the data, and/or combine the data.

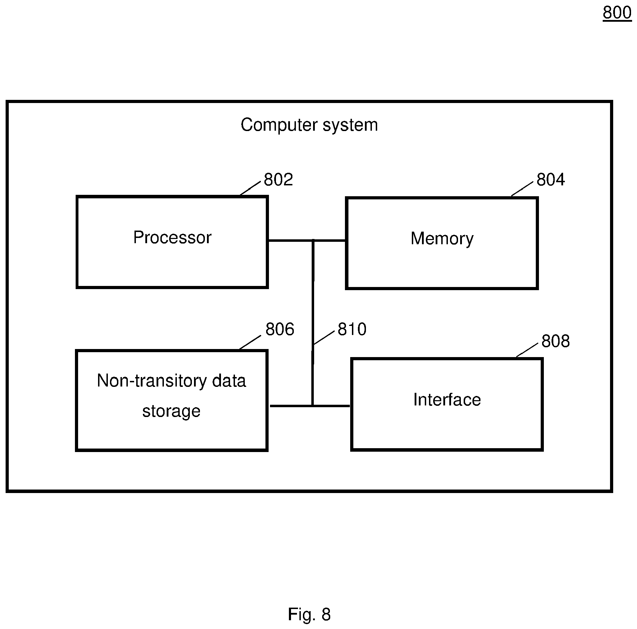

Figure 8 shows a computer system 800 with a plurality of computer hardware components configured to carry out steps of a data processing method in an Ethernet network according to various embodiments. The computer system 800 may include a processor 802, a memory 804, and a non-transitory data storage 806, and an interface 808.

The computer system 800 may be used as a data processing apparatus (in other words: central diagnosis station) according to various embodiments.

The processor 802 may carry out instructions provided in the memory 804. The non-transitory data storage 806 may store a computer program, including the instructions that may be transferred to the memory 804 and then executed by the processor 802. The memory 804 and/or the non-transitory data storage 806 may store data received from one or more locations in the Ethernet network, for example from distributed recorders and/ or from devices of the Ethernet network which implement the distributed recorders. The interface 808 may be a wired interface or a wireless interface to locations in the Ethernet network, for example to distributed recorders and/ or to devices of the Ethernet network which implement the distributed recorders.

The processor 802, the memory 804, the non-transitory data storage 806, and the interface 808 may be coupled with each other, e.g. via an electrical connection 810, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the data processing device 700 and/or for the computer system 800.

Features described in this specification and/or in the claims and/or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Features described as part of an embodiment or a figure shall be deemed separable from this embodiment or figure and shall be deemed combinable with features of other embodiments or figures, as far as technically possible. Descriptions of a method or procedure or a method step or a procedural step shall be understood also as a description of means for implementing the method or procedure or method step or procedural step and/or shall possibly also be understood as a description of an artefact made or modified by said method or procedure or method step or procedural step and/or shall possibly also be understood as a description of a data carrier holding program instructions of executable code adapted for implementing the method or procedure or method step or procedural step, and vice versa. In the present specification, references to the "invention" address the teaching as subjectively conceived by the inventors.

### List of reference numerals

100 exemplary Ethernet network
102, 104, 110, 116, 120, 126, 130, 136 computers
112, 114, 122, 124, 132, 134, 140, 142, 150, 152, 160, 162, 170, 172 Devices
200 illustration of an Ethernet network with distributed recorders according to various embodiments
202 central diagnosis station
204, 206, 208, 210 distributed recorders
212 computer
300 illustration of an Ethernet network with distributed recorders according to various embodiments
302 central diagnosis station
304, 306, 308, 310 distributed recorders
400 illustration of distributing configuration data and/or control data in an Ethernet network according to various embodiments
402 arrow indicating configuration data and/ or control data transmitted from the computer to the central diagnosis station
404, 404, 408 arrows indicating configuration data and/ or control data transmitted from the central diagnosis station to the distributed recorders
410 box illustrating interface to the central diagnosis station
412, 414 box near the connection line of the Ethernet network
500 illustration of collecting data in an Ethernet network according to various embodiments
502 merged data
504, 506, 508 data collected by distributed recorders
510, 512, 514 arrows illustrating data transmitted from distributed recorder to central diagnosis station
516 arrow illustrating merged data transmitted from central diagnosis station to computer
600 flow diagram illustrating a data processing method in an Ethernet network according to various embodiments
602 step of receiving data from a plurality of locations in the topology
604 step of merging the data received from the plurality of locations
700 data processing apparatus in an Ethernet network according to various embodiments
702 interface
704 merging circuit
706 connection
800 computer system according to various embodiments
802 processor
804 memory
806 non-transitory data storage
808 interface
810 connection

## Claims

1. Data processing method in an Ethernet network, the Ethernet network comprising a topology of a plurality of devices and a plurality of connections,
the data processing method comprising:
receiving (602) data from a plurality of locations in the topology; and
merging (604) the data received from the plurality of locations.

2. The data processing method of claim 1,
wherein the data from the plurality of locations in the topology is received via at least one connection of the plurality of connections; or
wherein the data from the plurality of locations in the topology is received via a connection independent from the plurality of connections.

3. The data processing method of any one of the preceding claims,
wherein the locations comprise at least one of the devices and/ or at least one of the connections.

4. The data processing method of any one of the preceding claims,
wherein the data comprises data processed by at least one of the devices and/or data transmitted using at least one of the connections and/or data acquired by at least one of the devices using a fieldbus and/or external hardware signals acquired by at least one of the devices.

5. The data processing method of any one of the preceding claims, further comprising:
configuring the locations for transmitting data to be processed by the data processing method.

6. The data processing method of claim 5,
wherein configuring the locations comprises synchronizing the locations; and
wherein the data comprises time stamps.

7. The data processing method of any one of the preceding claims,
wherein merging comprises sorting the data, and/ or filtering the data, and/or combining the data.

8. Data processing apparatus (700) in an Ethernet network, the Ethernet network comprising a topology of a plurality of devices and a plurality of connections,
the data processing apparatus (700) comprising:
an interface (702) configured to receive data from a plurality of locations in the topology; and
a merging circuit (704) configured to merge the data received from the plurality of locations.

9. The data processing apparatus (700) of claim 8,
wherein the interface (702) is connected to at least one connection of the plurality of connections; or
wherein the interface (702) is free from a connection to the plurality of connections.

10. The data processing apparatus (700) of any one of claims 8 to 9,
wherein the locations comprise at least one of the devices and/ or at least one of the connections.

11. The data processing apparatus (700) of any one of claims 8 to 10,
wherein the data comprises data processed by at least one of the devices and/or data transmitted using at least one of the connections and/or data acquired by at least one of the devices using a fieldbus and/or external hardware signals acquired by at least one of the devices.

12. The data processing apparatus (700) of any one of claims 8 to 11, further comprising:
a configuration circuit configured to configure the locations for transmitting data to be processed by the data processing method.

13. The data processing apparatus (700) of claim 12,
wherein the configuration circuit is configured to synchronize the locations; and
wherein the data comprises time stamps.

14. The data processing apparatus (700) of any one of claims 8 to 13,
wherein the merging circuit (704) is configured to sort the data, and/ or filter the data, and/or combine the data.

15. System comprising:
the data processing apparatus of any one of claims 8 to 14; and
the Ethernet network.

## Amended claims

### Amended claims in accordance with Rule 137(2) EPC.

1. Data processing method in an Ethernet network, the Ethernet network comprising a topology of a plurality of devices and a plurality of connections,
the data processing method comprising:
receiving (602) data from a plurality of locations in the topology;
merging (604) the data received from the plurality of locations; and
configuring the locations for transmitting data to be processed by the data processing method;
wherein configuring the locations comprises synchronizing the locations;
and
wherein the data comprises time stamps.

2. The data processing method of claim 1,
wherein the data from the plurality of locations in the topology is received via at least one connection of the plurality of connections; or
wherein the data from the plurality of locations in the topology is received via a connection independent from the plurality of connections.

3. The data processing method of any one of the preceding claims,
wherein the locations comprise at least one of the devices and/ or at least one of the connections.

4. The data processing method of any one of the preceding claims,
wherein the data comprises data processed by at least one of the devices and/or data transmitted using at least one of the connections and/or data acquired by at least one of the devices using a fieldbus and/or external hardware signals acquired by at least one of the devices.

5. The data processing method of any one of the preceding claims,
wherein merging comprises sorting the data, and/ or filtering the data, and/or combining the data.

6. Data processing apparatus (700) in an Ethernet network, the Ethernet network comprising a topology of a plurality of devices and a plurality of connections,
the data processing apparatus (700) comprising:
an interface (702) configured to receive data from a plurality of locations in the topology;
a merging circuit (704) configured to merge the data received from the plurality of locations; and
a configuration circuit configured to configure the locations for transmitting data to be processed by the data processing method;
wherein the configuration circuit is configured to synchronize the locations;
and
wherein the data comprises time stamps.

7. The data processing apparatus (700) of claim 6,
wherein the interface (702) is connected to at least one connection of the plurality of connections; or
wherein the interface (702) is free from a connection to the plurality of connections.

8. The data processing apparatus (700) of any one of claims 6 to 7,
wherein the locations comprise at least one of the devices and/ or at least one of the connections.

9. The data processing apparatus (700) of any one of claims 6 to 8,
wherein the data comprises data processed by at least one of the devices and/or data transmitted using at least one of the connections and/or data acquired by at least one of the devices using a fieldbus and/or external hardware signals acquired by at least one of the devices.

10. The data processing apparatus (700) of any one of claims 6 to 9,
wherein the merging circuit (704) is configured to sort the data, and/ or filter the data, and/or combine the data.

11. System comprising:
the data processing apparatus of any one of claims 6 to 10; and
the Ethernet network.
